# EUROPÄISCHE PATENTSCHRIFT

(11) **EP 2 731 401 B1**
(45) Veröffentlichungstag und Bekanntmachung des Hinweises auf die Patenterteilung: **09.08.2017**
(21) Anmeldenummer: 13192494.6
(22) Anmeldetag: 12.11.2013
(51) Int. Cl.: H05B 3/34, H05B 3/84, B60J 1/18, H01R 13/639

(54) **Cabriolet-Verdeck mit Heckscheibenheizung**
Convertible roof with rear window heating
Capote de cabriolet dotée d'un chauffage de la vitre arrière

(30) Priorität: 13.11.2012 DE 102012110906
(43) Veröffentlichungstag der Anmeldung: 14.05.2014
(73) Patentinhaber: Webasto-Edscha Cabrio GmbH, 82131 Stockdorf (DE)
(72) Erfinder: Striegl, Theo, 94486 Osterhofen (DE); Kaiser, Karl-Heinz, 94491 Hengersberg (DE); Kling, Alexander, 93128 Regenstauf (DE)
(74) Vertreter: advotec.

(56) Entgegenhaltungen:
- EP-A1- 2 309 604
- DE-A1- 2 529 619
- DE-A1-102007 003 015
- DE-A1-102010 049 103
- US-B1- 6 620 365

## Beschreibung

Die Erfindung betrifft ein Verdeck eines Cabriolet-Fahrzeugs mit den Merkmalen des Oberbegriffs des Patentanspruchs 1.

Aus der Praxis ist ein Verdeck bekannt, das als verstellbares Dach eines als Cabriolet ausgebildeten Kraftfahrzeuges dient. Das Verdeck umfasst hierzu einen Verdeckbezug, der mittels eines Verdeckgestänges zwischen einer einen Fahrzeuginsassenraum überspannenden Schließstellung und einer den Fahrzeuginsassenraum nach oben freigebenden Ablagestellung verstellbar ist. In einem heckseitigen Ausschnitt nimmt der Verdeckbezug eine Heckscheibe auf, die zur Anbindung an den Verdeckbezug mit einem Heckscheibenrahmen versehen ist. Die Heckscheibe kann eine Heckscheibenheizung aufweisen, die über ein Anschlusselement mit einer elektrischen Versorgungsleitung verbunden ist. Ein an der elektrischen Versorgungsleitung ausgebildetes Gegenelement zu dem Anschlusselement ist zur mechanischen Fixierung mittels Befestigungsmaterial, wie einen Kabelbinder, ein Klettband oder dergleichen, an dem Heckscheibenrahmen oder auch an einem dem Verdeckgestänge zugeordneten Heckscheibenrahmenlenker befestigt. Die Verwendung des Befestigungsmaterials erfordert eine aufwändige Montage und ist zudem mit zusätzlichen Kosten verbunden.

Ein Verdeck der einleitend genannten Gattung ist aus der Druckschrift US 6,620,365 B1 bekannt und umfasst einen Verdeckbezug und eine Heckscheibe, die über einen Rahmen in eine Ausnehmung des Verdeckbezugs aufgenommen ist. Die Heckscheibe weist aufgedruckte Drähte auf, die eine Heckscheibenheizung ausbilden. Die Heckscheibenheizung ist mit einem laschenartigen Anschlusselement versehen, die mit einem Stecker einer elektrischen Versorgungsleitung in Eingriff gebracht werden kann. Der Stecker kann in einer Aufnahme des Heckscheibenrahmens fixiert werden.

Aus der Druckschrift DE 25 29 619 A1 ist ein steckbarer elektrischer Anschluss für Scheibenheizung eines Kraftwagens bekannt. Der Anschluss ist in einer Ausnehmung eines Rahmens auf ein laschenartiges Anschlusselement der Scheibenheizung aufgesteckt.

Aus der Druckschrift DE 10 2007 003 015 A1 ist eine Anordnung einer Halterung eines Heizleiteranschlusses an einer Kunststoffscheibe eines Cabrio-Fahrzeugs bekannt. Die Anordnung umfasst ein Haltelement, das mit der Ausformung der Kunststoffscheibe ausgebildet ist.

Aus der Druckschrift DE 10 2010 049 103 A1 ist eine Kontakteinrichtung zum Kontaktieren von Leitungsstrukturen in einem Glasbauteil eines Kraftfahrzeuges bekannt.

Aus der Druckschrift EP 2 309 604 A1 ist eine Verbundglasscheibe bekannt, die mit einem Rahmen und einer elektrisch leitenden Verbindung versehen ist. Die elektrisch leitende Verbindung umfasst einen Flachleiter und ein Kabel, welche über eine Steckverbindung zerstörungsfrei lösbar miteinander verbunden sind.

Der Erfindung liegt die Aufgabe zugrunde, ein Verdeck der einleitend genannten Gattung zu schaffen, das eine gegenüber dem vorstehend beschriebenen Stand der Technik vereinfachte und kostengünstigere Anbindung der Heckscheibenheizung an eine Versorgungsleitung ermöglicht.

Diese Aufgabe ist erfindungsgemäß durch das Verdeck mit den Merkmalen des Patentanspruchs 1 gelöst.

Erfindungsgemäß wird mithin ein Verdeck eines Cabriolet-Fahrzeugs vorgeschlagen, das einen Verdeckbezug umfasst, der mittels eines Verdeckgestänges zwischen einer einen Fahrzeuginsassenraum überspannenden Schließstellung und einer den Fahrzeuginsassenraum nach oben freigebenden Ablagestellung verstellbar ist. In einem heckseitigen Ausschnitt nimmt der Verdeckbezug eine Heckscheibe auf, die zur Anbindung an den Verdeckbezug mit einem Heckscheibenrahmen versehen ist und eine Heckscheibenheizung aufweist, die über ein Anschlusselement mit einer elektrischen Versorgungsleitung verbunden ist. Das Anschlusselement ist eine Kontaktlasche, die mit einem Kontaktstecker der elektrischen Versorgungsleitung in Eingriff steht, der in einer korrespondierenden Aufnahme des Heckscheibenrahmens verrastet ist. Der Kontaktstecker weist ein zumindest annähernd quaderförmig ausgebildetes Gehäuse auf, das von mindestens zwei Rasthaken des Heckscheibenrahmens in der Aufnahme gehalten ist. Damit kann auch die Geometrie der Rasthaken einfach gehalten werden.

Vorgeschlagen wird gemäß der Erfindung also eine Steckverbindung zwischen dem eine Kontaktlasche darstellenden Anschlusselement und dem Kontaktstecker der elektrischen Versorgungsleitung. Zudem ist der Kontaktstecker dadurch fixiert, dass er direkt an dem Heckscheibenrahmen verrastet bzw. verklipst ist, und zwar in der eigens für den Kontaktstecker vorgesehenen Aufnahme des Heckscheibenrahmens. Es ist damit kein zusätzliches Befestigungsmaterial zum Fixieren des Kontaktsteckers und damit auch kein zusätzlicher Bauraum für selbiges erforderlich. Zudem stellt das Stecken und Verrasten des Kontaktsteckers einen einfachen Montageschritt dar. Durch entsprechende Gestaltung des Heckscheibenrahmens ist der Kontaktstecker auch prozesssicher und platzsparend in dem durch die Aufnahme definierten Bauraum verbaubar.

Bei einer zweckmäßigen Ausführungsform des Verdecks nach der Erfindung begrenzen die Rasthaken die Aufnahme und damit auch den Kontaktstecker seitlich, wobei sie das Gehäuse des Kontaktsteckers jeweils mit einem Hakenabschnitt übergreifen. Die Rasthaken können federnd ausgebildet sein. Damit kann der Kontaktstecker von oben zwischen den Hakenabschnitten hindurchgeführt werden, die bei Erreichen der Montagestellung über das Kontaktsteckergehäuse schnappen und den Kontaktstecker von oben in der Aufnahme halten.

Um den Kontaktstecker bzw. dessen Gehäuse auch in einer dritten Raumrichtung sicher an dem Heckscheibenrahmen halten zu können, sind bei einer bevorzugten Ausführungsform des Verdecks nach der Erfindung Rastmittel vorgesehen, die das Gehäuse des Kontaktsteckers parallel zur Achse der Kontaktlasche an dem Heckscheibenrahmen in Position halten. Beispielsweise sind an dem Gehäuse des Kontaktsteckers seitlich Ausnehmungen ausgebildet, in die jeweils ein Rastzapfen oder dergleichen eingreift, der federnd an dem Heckscheibenrahmen ausgebildet ist. Das in die Ausnehmung des Gehäuses des Kontaktsteckers eingreifende Element kann auch einer der Rasthaken sein, der die Aufnahme seitlich begrenzt. Auch kann eine Rastnase vorgesehen sein, die das Gehäuse des Kontaktsteckers an dessen der Heckscheibe abgewandten Stirnseite hintergreift und stützt.

Um eine Endposition des Kontaktsteckers bei der Montage an dem Heckscheibenrahmen zu definieren, weist das Gehäuse des Kontaktsteckers vorzugsweise einen Anschlag auf, der mit einem Gegenanschlag des Heckscheibenrahmens zusammenwirkt und eine Endlage des Kontaktsteckers gegenüber dem Heckscheibenrahmen bei der Montage definiert. Der Gegenanschlag ist beispielsweise von einem Führungssteg gebildet, der die Aufnahme seitlich begrenzt und dessen der Aufnahme zugewandte Führungsfläche mit einer Anlagefläche des auf der betreffenden Seite angeordneten Rasthakens fluchtet.

Die Kontaktlasche erstreckt sich zweckmäßigerweise zumindest in ihrem mit dem Kontaktstecker in Eingriff stehenden Abschnitt zumindest annährend parallel zur Ebene der Heckscheibe. Damit kann ein einfaches Einschieben des Kontaktsteckers in die Aufnahme des Heckscheibenrahmens gewährleistet werden und der Kontaktstecker entlang einer Linie in die Aufnahme des Heckscheibenrahmens eingeschoben werden, die der Achse der Kontaktlasche entspricht.

Um dem Heckscheibenrahmen eine den Anforderungen entsprechende, gegebenenfalls auch komplexe Geometrie verleihen zu können, ist dieser vorzugsweise als Kunststoffspritzgießteil ausgebildet.

Weitere Vorteile und vorteilhafte Ausgestaltungen des Gegenstandes der Erfindung sind der Beschreibung, der Zeichnung und den Patentansprüchen entnehmbar.

Ein Ausführungsbeispiel eines Verdecks nach der Erfindung ist in der Zeichnung schematisch vereinfacht dargestellt und wird in der nachfolgenden Beschreibung näher erläutert. Es zeigt:
- Figur 1: eine perspektivische Ansicht auf ein Faltverdeck in dessen einen Fahrzeuginsassenraum überspannenden Schließstellung;
- Figur 2: eine Draufsicht auf einen Heckscheibenrahmen nach Figur 2 des Faltverdecks;
- Figur 3: einen Schnitt durch den Heckscheibenrahmen entlang der Linie D-D in Figur 2;
- Figur 4: einen Schnitt durch den Heckscheibenrahmen nach Figur 2 entlang der Linie C-C in Figur 2; und
- Figur 5: einen weiteren Schnitt durch den Heckscheibenrahmen nach Figur 2 entlang der Linie B-B in Figur 2.

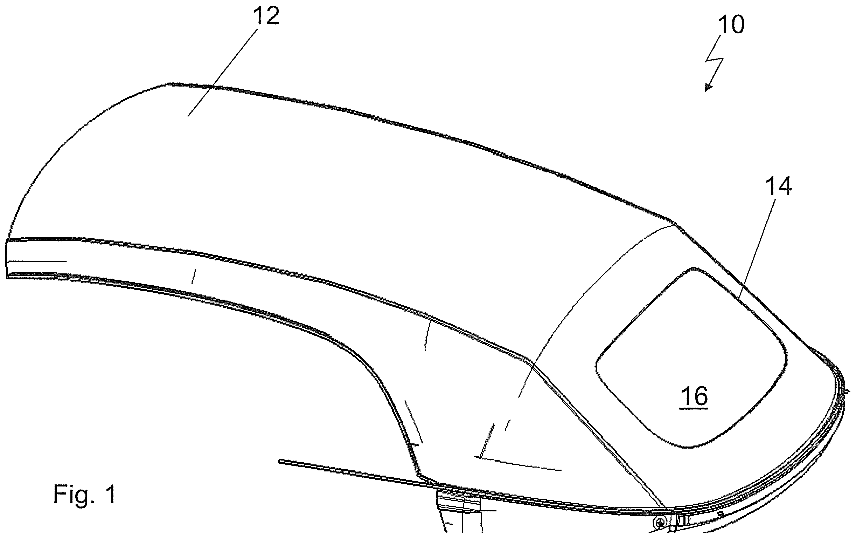

In der Zeichnung ist ein Faltverdeck 10 dargestellt, das ein verstellbares Dach eines als Cabriolet ausgebildeten, im Übrigen nicht näher dargestellten Kraftfahrzeuges ist und hierzu zwischen einer in Figur 1 dargestellten, einen Fahrzeuginsassenraum überspannenden Schließstellung und einer den Fahrzeuginsassenraum nach oben freigebenden Ablagestellung verstellbar ist, in der es von einem heckseitigen Verdeckablagekasten des Kraftfahrzeuges aufgenommen ist. Zum Verstellen weist das Faltverdeck ein nicht näher dargestelltes Verdeckgestänge auf, das über entsprechende Hauptlager im Bereich des heckseitigen Verdeckablagekastens des Kraftfahrzeuges gelagert ist.

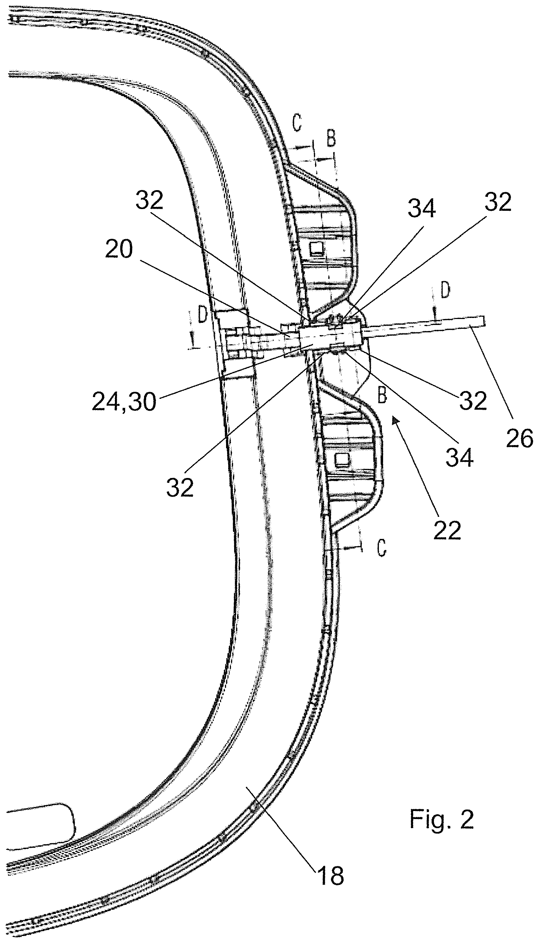

Das Faltverdeck 10 umfasst einen Verdeckbezug 12 aus einem wasserdichten und witterungsbeständigen textilen Material, der mittels des Verdeckgestänges zum Überspannen des Fahrzeuginsassenraums aufspannbar ist. In einem heckseitigen Abschnitt weist der Verdeckbezug 12 einen Ausschnitt 14 auf, in dem eine Heckscheibe 16 angeordnet ist, die über einen in den Figuren 2 bis 5 näher dargestellten Heckscheibenrahmen 18 an den Verdeckbezug 12 angebunden ist.

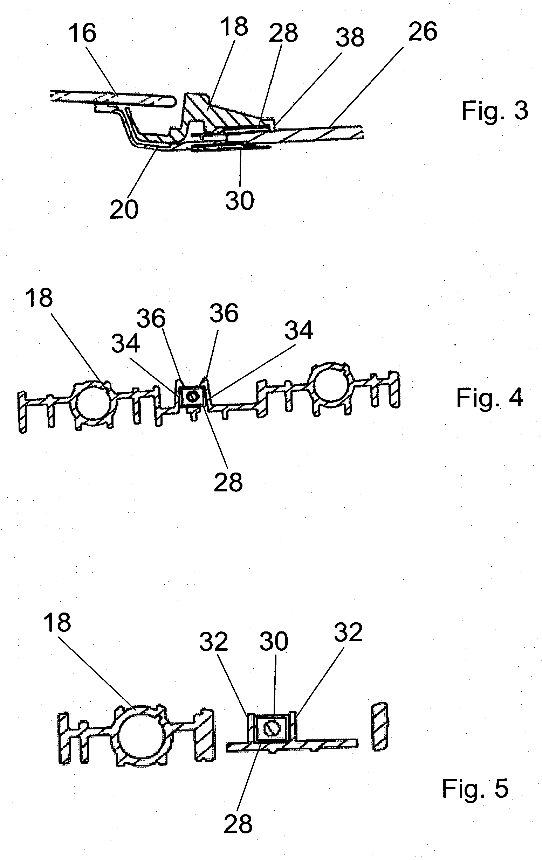

Die Heckscheibe 16 ist mit einer in üblicher Weise ausgebildeten und daher nicht näher dargestellten Heckscheibenheizung versehen, welche mit einem Anschlusselement versehen ist, das als Kontaktlasche 20 ausgebildet ist, welche, wie Figur 3 zu entnehmen ist, von einer Heckscheibeninnenseite, an der die Heckscheibenheizung ausgebildet ist, entlang der Profilierung des Heckscheibenrahmens 18 zu einem Heizungsanschlussbereich 22 geführt ist. In dem Heizungsanschlussbereich 22, in dem sich die Achse der Kontaktlasche 20 zumindest weitgehend annähernd parallel zur Ebene der Heckscheibe 16 erstreckt, steht die aus einem Metallstreifen gefertigte Kontaktlasche 20 mit einem Kontaktstecker 24 in Eingriff, der an einer Versorgungsleitung 26 ausgebildet ist, welche zu einem Bordnetz des betreffenden Kraftfahrzeuges führt. Der Kontaktstecker 24 ist also auf die Kontaktlasche 20 aufgesteckt

An dem ein Kunststoffspritzgießteil darstellenden Heckscheibenrahmen 18 ist in dem Heizungsanschlussbereich 22 eine Aufnahme 28 ausgeformt, welche mit der quaderartigen Form eines Gehäuses 30 des Kontaktsteckers 24 korrespondiert.

Bezogen auf die Längsachse des Kontaktsteckers 24 ist die Aufnahme 28 beidseits seitlich jeweils von zwei Führungsstegen 32 und jeweils von einem Rasthaken 34 begrenzt, der zwischen den beiden Führungsstegen 32 der jeweiligen Seite angeordnet ist. Die Führungsstege 32 und die Rasthaken 34 liegen in Montagestellung seitlich an dem Gehäuse 30 des Kontaktsteckers 24 an. Die Rasthaken 34 weisen stirnseitig jeweils einen Hakenabschnitt 36 auf, der das Gehäuse 30 des Kontaktsteckers 24 übergreift und diesen so von oben in Position bzw. in der Aufnahme 28 des Heckscheibenrahmens 18 hält.

Um ein Lösen des Kontaktsteckers 24 in seiner axialen Richtung zu verhindern, ist an dem Heckscheibenrahmen 18 des Weiteren als zusätzliches Rastmittel ein Rastvorsprung 38 ausgebildet, der die der Heckscheibe 16 abgewandte Stirnseite des Gehäuses 30 des Kontaktsteckers 24 hintergreift.

Zudem weist das Gehäuse 30 des Kontaktsteckers 24 im Bereich seiner hinteren, das heißt der Heckscheibe 16 abgewandten Stirnseite einen Anschlag 40 auf, der mit einem der Führungsstege 32 im montierten Zustand zur Anlage kommt und so die Endlage des Kontaktsteckers 24 bei seiner Montage, das heißt bei seiner Anbindung an die Kontaktlasche 20 definiert.

### Bezugszeichenliste

- 10: Faltverdeck
- 12: Verdeckbezug
- 14: Ausschnitt
- 16: Heckscheibe
- 18: Heckscheibenrahmen
- 20: Kontaktlasche
- 22: Heizungsanschlussbereich
- 24: Kontaktstecker
- 26: Versorgungsleitung
- 28: Aufnahme
- 30: Gehäuse
- 32: Führungsstege
- 34: Rasthaken
- 36: Hakenabschnitt
- 38: Rastvorsprung
- 40: Anschlag

## Patentansprüche

1. Verdeck eines Cabriolet-Fahrzeugs, umfassend einen Verdeckbezug (12), der mittels eines Verdeckgestänges zwischen einer einen Fahrzeuginsassenraum überspannenden Schließstellung und einer den Fahrzeuginsassenraum nach oben freigebenden Ablagestellung verstellbar ist und in einem heckseitigen Ausschnitt (14) eine Heckscheibe (16) aufnimmt, die zur Anbindung an den Verdeckbezug (12) mit einem Heckscheibenrahmen (18) versehen ist und eine Heckscheibenheizung aufweist, die über ein Anschlusselement mit einer elektrischen Versorgungsleitung (26) verbunden ist, wobei das Anschlusselement eine Kontaktlasche (20) ist, die mit einem Kontaktstecker (24) der elektrischen Versorgungsleitung (26) in Eingriff steht, der in einer korrespondierenden Aufnahme (28) des Heckscheibenrahmens (18) verrastet ist, **dadurch gekennzeichnet, dass** der Köntaktstecker (24) ein zumindest annährend quaderförmig ausgebildetes Gehäuse (30) aufweist, das von mindestens zwei Rasthaken (34), die an dem Heckscheibenrahmen (18) ausgebildet sind, in der Aufnahme gehalten ist.

2. Verdeck nach Anspruch 1, **dadurch gekennzeichnet, dass** die Rasthaken (34) die Aufnahme (28) seitlich begrenzen und das Gehäuse (30) des Kontaktsteckers (24) jeweils mit einem Hakenabschnitt (36) übergreifen.

3. Verdeck nach Anspruch 1 oder 2, **gekennzeichnet durch** Rastmittel, die das Gehäuse (30) des Kontaktsteckers (24) parallel zur Achse der Kontaktlasche (20) an dem Heckscheibenrahmen (18) in Position halten.

4. Verdeck nach einem der Ansprüche 1 bis 3, **dadurch gekennzeichnet, dass** das Gehäuse (30) des Kontaktsteckers (24) einen Anschlag (40) aufweist, der mit einem Gegenanschlag des Heckscheibenrahmens (18) zusammenwirkt und eine Endlage des Kontaktsteckers (24) gegenüber dem Heckscheibenrahmen (18) bei der Montage definiert.

5. Verdeck nach einem der Ansprüche 1 bis 4, **dadurch gekennzeichnet, dass** sich die Kontaktlasche (20) zumindest in seinem mit dem Kontaktstecker (24) in Eingriff stehenden Abschnitt zumindest annähernd parallel zur Ebene der Heckscheibe (16) erstreckt.

6. Verdeck nach einem der Ansprüche 1 bis 5, **dadurch gekennzeichnet, dass** der Heckscheibenrahmen (18) ein Kunststoffspritzgießteil ist.

## Claims

1. A convertible top of a convertible vehicle, comprising a convertible-top cover (12) which can be displaced between a closed position spanning a vehicle interior and a stowage position releasing the vehicle interior to the top by means of a convertible-top linkage and accommodates a backlite (16) in a rear-side cutout (14), said backlite (16) being provided with backlite frame (18) for being connected to the convertible-top cover (12) and comprising a backlite heater which is connected to an electrical supply line (26) via a connecting element, said connecting element being a contact tab (20) which engages with a contact plug (24) of the electrical supply line (26), said contact plug (24) being locked in a corresponding recess (28) of the backlite frame (18), **characterized in that** the contact plug (24) comprises an at least nearly cuboid casing (30) which is retained in the recess by at least two locking hooks (34) formed on the backlite frame (18).

2. The convertible top according to claim 1, **characterized in that** the locking hooks (34) laterally delimit the recess (28) and each engage over the casing (30) of the contact plug (24) using a hook section (36).

3. The convertible top according to claim 1 or 2, **characterized by** locking means which keep the casing (30) of the contact plug (24) in position at the backlite frame (18) parallel to the axis of the contact tab (20).

4. The convertible top according to any one of the claims 1 to 3, **characterized in that** the casing (30) of the contact plug (24) comprises a stop (40) which interacts with a counter-stop of the backlite frame (18) and defines an end position of the contact plug (24) with respect to the backlite frame (18) when being installed.

5. The convertible top according to any one of the claims 1 to 4, **characterized in that** the contact tab (20) extends nearly parallel to the plane of the backlite (16) in its section engaged with the contact plug (24).

6. The convertible top according to any one of the claims 1 to 5, **characterized in that** the backlite frame (18) is a plastic injection molded part.

## Revendications

1. Capote de cabriolet d'un véhicule de cabriolet, comprenant un revêtement (12) de capote de cabriolet qui peut être déplacé entre une position fermée recouvrant un intérieur de véhicule et une position de rangement révélant l'intérieur de véhicule en haut au moyen d'une tringlerie de capote de cabriolet et reçoit une vitre (16) arrière dans un découpage (14) à l'arrière de véhicule, ladite vitre (16) arrière étant prévue d'un cadre (18) de vitre arrière pour être reliée au revêtement (12) de la capote de cabriolet et comprenant un chauffage de vitre arrière qui est relié à un conduit (26) d'alimentation électrique par un élément de reliaison, ledit élément de reliaison étant un collier (20) de contact qui s'engage avec un connecteur (24) de contact du conduit (26) d'alimentation électrique, ledit connecteur (24) de contact étant enclenché dans une ouverture (28) correspondant du cadre (18) de vitre arrière, **caractérisée en ce que** le connecteur (24) de contact comprend un boîtier (30) qui est au moins presque parallélépipédique et est tenu dans l'ouverture par au moins deux crochets (34) d'enclenchement formés sur le cadre (18) de vitre arrière.

2. Capote de cabriolet selon la revendication 1, **caractérisée en ce que** les crochets (34) d'enclenchement délimitent latéralement l'ouverture (28) et chacun s'engage sur le boîtier (30) du connecteur (24) de contact en utilisant une section (36) de crochet.

3. Capote de cabriolet selon la revendication 1 ou 2, **caractérisée par** des moyens d'enclenchement qui tient le boîtier (30) du connecteur (24) de contact en position sur le cadre (18) de vitre arrière parallèlement à l'axis du collier (20) de contact.

4. Capote de cabriolet selon l'une quelconque des revendications 1 à 3, **caractérisée en ce que** le boîtier (30) du connecteur (24) de contact comprend un arrêt (40) qui interagit avec un contre-arrêt du cadre (18) de vitre arrière and définie une position d'extrémité du connecteur (24) de contact par rapport au cadre (18) de vitre arrière pendant le montage.

5. Capote de cabriolet selon l'une quelconque des revendications 1 à 4, **caractérisée en ce que** le collier (20) de contact s'étend au moins presque parallèlement au plan de la vitre (16) arrière dans sa zone engageant avec le connecteur (24) de contact.

6. Capote de cabriolet selon l'une quelconque des revendications 1 à 5, **caractérisée en ce que** le cadre (18) de vitre arrière est une pièce moulée d'injection plastique.
